# EUROPEAN PATENT APPLICATION

(11) **EP 4 618 382 A1**
(43) Date of publication of application: **17.09.2025**
(21) Application number: 25162516.6
(22) Date of filing: 10.03.2025
(51) Int. Cl.: H02K 15/095

(54) **WINDING DEVICE**

(30) Priority: 12.03.2024 JP 2024037778
(71) Applicant: Mitsuba Corporation, Kiryu-shi, Gunma 376-8555 (JP)
(72) Inventor: FUKUSHIMA, YUSUKE, Kiryu-shi, Gunma, 3768555 (JP); OHKAWARA, TOMOKI, Kiryu-shi, Gunma, 3768555 (JP); ISHIDA, TAKAHITO, Kiryu-shi, Gunma, 3768555 (JP); SUGIYAMA, MASAYUKI, Kiryu-shi, Gunma, 3768555 (JP)
(74) Representative: Becker Kurig & Partner Patentanwälte mbB

(57) **Abstract**

A winding device (10) includes: a wire supply part (11) supplying a wire in a round shape; a shaping part (12) shaping the wire into a rectangular shape; a tension adjustment part (13) provided downstream of the shaping part (12) and controlling a tension during winding; and a winding part (14) provided downstream of the tension adjustment part (13) and winding the wire on the winding target. The shaping part (12) does not perform shaping on a portion of the wire corresponding to a start-finish end of the winding target, and performs shaping on the wire corresponding to a portion to be wound on the winding target. The tension adjustment part (13) includes a tension roller and a motor rotating the tension roller. The tension roller has a gripping force drawing out the wire from the shaping part (12) without slippage with respect to the wire.

## Description

### [Technical Field]

The present invention relates to a winding device.

### [Background Art]

In the case of shaping a round wire into a rectangular wire by a rectangular wire shaping device and winding the shaped rectangular wire on a teeth part of a split core, there is a possibility that the wire may be damaged when changing the cross-sectional shape of the wire.

Thus, as an objective, Patent Document 1 discloses providing a winding device capable of suppressing quality deterioration of products due to damage to the wire, even in the case of winding on a winding target after deforming the cross-sectional shape of the wire midway.

Specifically, it is disclosed that the winding device is a winding device supplying a wire from a wire supply source to a winding target side and winds on the winding target, and is characterized by including a wire deformation part that is disposed on the downstream side of the wire supply source and changes the cross-sectional shape of the wire, and a damage detection part that is disposed on the downstream side of the wire deformation part and detects damage to the wire.

### [Prior Art Documents]

### [Patent Documents]

[Patent Document 1] Japanese Patent Application Laid-Open No. 2023-132628

### SUMMARY OF INVENTION

### [Problem to Be Solved by Invention]

In Patent Document 1, a rectangle shaping machine serving as the wire deformation part has a configuration in which a pair of shaping rollers provided in the up-down direction with respect to the wire and shaping rollers provided in the left-right direction with respect to the wire are disposed in a row in the longitudinal direction, to thus shape the wire with a round cross-section into a rectangular shape.

In the rectangle shaping machine, since the metal wire for the coil passes between a pair of rollers disposed at an interval that cannot be passed without being deformed, a large drawing force is required to draw the wire out from the rectangle shaping machine. For this reason, in the actual device, the rectangle shaping machine includes a drawing roller that draws out the wire in the vicinity of the downstream side of the shaping rollers.

On the other hand, in a winding target such as a split stator core, both ends (also referred to as start-finish ends) of the coil wire to be wound become lead portions for connection. For this reason, it is preferable that the start-finish ends of the wire wound on the winding target remain in a round shape which facilitates the connection work performed after the winding.

To form such start-finish ends that remain in a round shape, shaping by the shaping rollers is not performed on the wire portion corresponding to the start-finish ends, and shaping by the shaping rollers is performed on a following portion to be wound on the winding target.

Specifically, a short length portion serving as an initial start end is kept as a wire in a round shape, followed by shaping a rectangular shape to be wound. The wire in a round shape of the start end is not wound on the winding target, and the portion in a rectangular shape is wound.

Then, at a wire portion (also referred to as a start-finish end portion) of a short length corresponding to a finish end portion for the current winding target and a start end portion of a next winding target, again, shaping is not performed, and the wire is kept in a round shape. Subsequently, shaping of the rectangular shape is performed corresponding to the portion to be wound, and further, the wire portion of a short length that is to be taken as the start-finish end portion is not shaped. The above flow is repeated.

In other words, regarding the shaping of the wire, shaping is performed such that there are repetitions of a portion of a short length that is not shaped, followed by a portion of a long length shaped into a rectangular shape.

Then, upon reaching the finish end of the current winding target, the start-finish end portion is cut to separate into a finish end portion and a start end portion. The portion from the start end portion onward becomes the wire for the next winding target, and the winding work is continuously performed with the above repeated.

In addition, the split stator core, which is the winding target, naturally has shape variations within the range of manufacturing tolerances. In other words, the outer shape of the portion to be wound may be smaller or larger, and the variation in the outer shape manifests as a difference in the length of the wire required in winding the wire for the same winding count.

Accordingly, even if the winding count for the winding target is the same, variations occur in the required length of the wire to be wound.

Then, for example, in the case where the pass line distance from the shaping rollers to the winding target corresponds to the length of the wire to be wound on the winding target, at the start of winding of the wire on the winding target, the wire portion to be taken as the start-finish end portion, which serves as a boundary with a next winding target, is located at the shaping rollers.

As a result, as soon as winding starts, since a next start-finish end portion (wire portion in a round shape that is not shaped) enters the pass line, it becomes apparent midway that with a design wire length, the winding count would be insufficient, and even if one wants to shift the start-finish end portion backward, this cannot be done.

Then, in the case where the winding count is insufficient, to achieve the original winding count, it means that a longer wire is required. Thus, to achieve the required winding count, the start-finish end portion ends up entering the winding portion.

When the above occurs, not only does it cause winding collapse, but since the portion in a rectangular shape is located at the portion to be taken as the finish end, there is a problem of increased defect rate in a subsequent connection process.

On the other hand, in recent years, with the types of motors increasing, there have been more variations in the winding length of the wire on the split stator core, and product types with shorter winding lengths have also been available.

Accordingly, to create start-finish ends that are not shaped while avoiding the above problem, it has been concluded that it is important to shorten the pass line and to be able to provide the start-finish end portion at a position shifted backward, with the start-finish end portion not yet entering the pass line at a time point of determining that the winding count is insufficient.

The present invention has been made in view of such circumstances, and an objective thereof is to provide a winding device that shortens a pass line distance from a shaping part performing shaping of a wire to a winding target.

### [Means for Solving Problem]

To achieve the above objective, the present invention is realized by the following configurations. A winding device of the present invention is a winding device winding a wire on a winding target. The winding device includes: a wire supply part that supplies the wire in a round shape; a shaping part that is provided on a downstream side of the wire supply part and shapes the wire into a rectangular shape; a tension adjustment part that is provided on a downstream side of the shaping part and controls a tension during winding; and a winding part that is provided on a downstream side of the tension adjustment part and winds the wire on the winding target. The shaping part does not perform shaping on a portion of the wire corresponding to a start-finish end of the winding target, and performs shaping on the wire corresponding to a portion to be wound on the winding target. The tension adjustment part includes: a tension roller; and a motor that rotates the tension roller. The tension roller has a gripping force for drawing out the wire from the shaping part without slippage with respect to the wire.

### [Effects of Invention]

According to the present invention, it is possible to provide a winding device that shortens a pass line distance from a shaping part performing shaping of a wire to a winding target.

### BRIEF DESCRIPTION OF DRAWINGS

FIG. 1 is a perspective view of a brushless motor having split cores suitably applicable to a winding device of an embodiment related to the present invention.
FIG. 2 is a side view of a portion corresponding to one split core of the embodiment related to the present invention.
FIG. 3 is a top view for describing the winding device of the embodiment related to the present invention.
FIG. 4 is a view for describing a shaping action in a shaping part of the embodiment related to the present invention.
FIG. 5 is a side view showing a portion of an encoder of the embodiment related to the present invention as viewed from the lateral side.

### EMBODIMENTS FOR IMPLEMENTING INVENTION

Hereinafter, embodiments for implementing the present invention (hereinafter referred to as "embodiments") will be described in detail with reference to the attached drawings. Throughout the description of the embodiments, the same elements will be labeled with the same numbers or symbols.

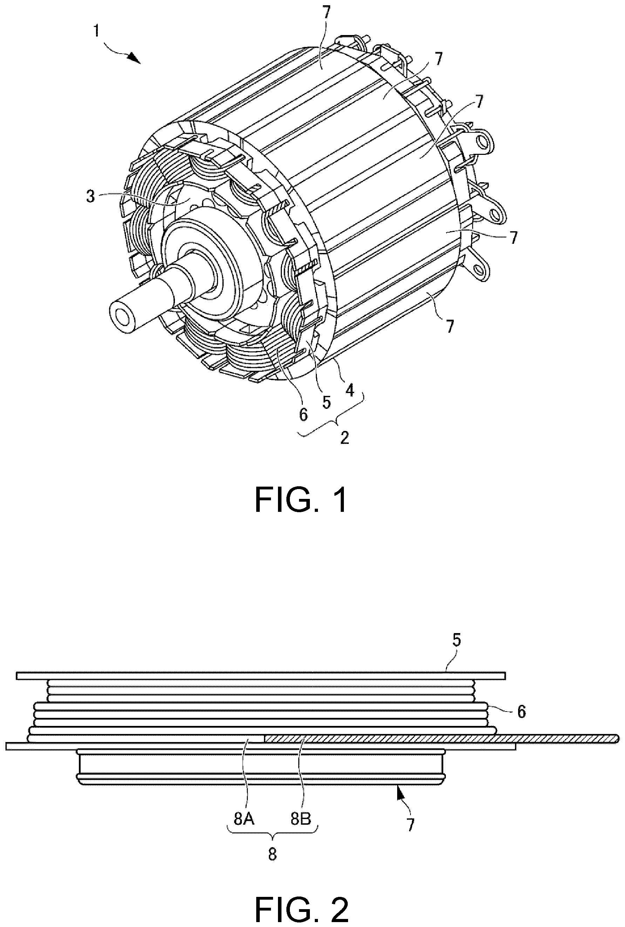

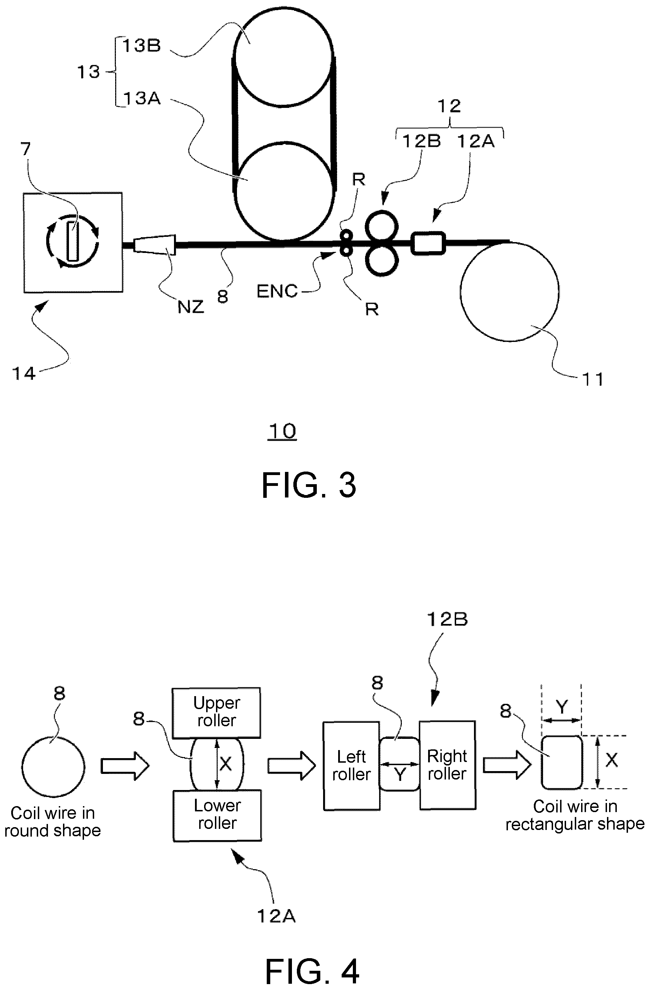

FIG. 1 is a perspective view of a brushless motor 1 having split cores 7 suitably applicable to a winding device 10 (see FIG. 3) of an embodiment related to the present invention. FIG. 2 is a side view of a portion corresponding to one split core 7 of the embodiment related to the present invention.

As shown in FIG. 1, for example, the brushless motor 1 (also simply referred to as a motor) includes a stator 2 press-fitted into a housing (not shown), and a rotor 3 disposed on a radially inner side of the stator 2 to be provided rotatably with respect to the stator 2.

The stator 2 includes a stator core 4, an insulator 5 having insulating properties mounted to the stator core 4, and a coil 6.

The stator core 4 is a split core type stator core 4 formed by annularly connecting multiple split cores 7 (an example of a winding target of the present invention) split in the circumferential direction.

As shown in FIG. 2, a coil wire 8 (an example of a wire of the present invention) is wound on the split core 7 to form the coil 6. The coil wire 8 of a portion 8A wound on the split core 7 is in a rectangular shape so as to be wound as tightly as possible without gaps, increase density, and improve performance of the motor.

In contrast, the coil wire 8 of a portion 8B (hereinafter also referred to as a start end, a finish end, or collectively as start-finish ends) drawn out from the split core 7 is a coil wire 8 in a round shape to thus reduce occurrence of defects during a connection work of welding to a bus bar or the like. Since FIG. 2 is a side view, only the finish end of the start-finish ends is depicted, and the start end overlapping in the depth direction of the paper sheet is not visible.

The winding device 10 of this embodiment is a device suitable for winding on the split core 7 while shaping the portion to be wound into a rectangular shape and keeping the start-finish ends in a round shape. This will be described below with reference to FIG. 3 to FIG. 5.

FIG. 3 is a top view for describing the winding device 10 of the embodiment related to the present invention. As shown in FIG. 3, the winding device 10 of this embodiment includes a wire supply part 11 that supplies the coil wire 8 in a round shape, a shaping part 12 that is provided on the downstream side of the wire supply part 11 to shape the coil wire 8 into a rectangular shape, a tension adjustment part 13 that is provided on the downstream side of the shaping part 12 to control the tension during winding, and a winding part 14 that is provided on the downstream side of the tension adjustment part 13 to wind the coil wire 8 while rotating the split core 7 by a rotation mechanism (not shown) rotating the split core 7.

The upstream side (upstream) refers to the wire supply part 11 side on which supply of the coil wire 8 starts, and the downstream side (downstream) refers to the winding part 14 side, which is the opposite side thereto. Such meanings will also apply hereinafter.

In addition, the mechanism winding the coil wire 8 on the split core 7 is not limited thereto, and in this embodiment, the winding part 14 includes a rotation mechanism (not shown) that winds the coil wire 8 supplied to the split core 7 by rotating while holding the split core 7 and the start end of the coil wire 8.

Then, the winding device 10 of this embodiment includes an encoder ENC that is provided on the immediate downstream side of the shaping part 12 (at a position before reaching the tension adjustment part 13), and a nozzle NZ that supplies the coil wire 8 to the winding part 14.

The wire supply part 11 is a reel on which a so-called magnet wire in a round shape serving as the coil wire 8 is wound.

The shaping part 12 includes a first shaping part 12A having a pair of shaping rollers that sandwiches and shapes the coil wire 8 from a first direction (up-down direction) perpendicular to the coil wire 8 (in the figure, only the shaping roller located on the upper side is visible), and a second shaping part 12B having a pair of shaping rollers that sandwiches and shapes the coil wire 8 from a second direction (left-right direction) perpendicular to the coil wire 8 and the first direction.

FIG. 4 is a view for describing a shaping action in the shaping part 12 of the embodiment related to the present invention, illustrating upstream toward downstream from the left side to the right side. As shown in FIG. 4, the coil wire 8 supplied from the wire supply part 11 is a coil wire 8 in a round shape.

Then, when the coil wire 8 passes through the first shaping part 12A of a width restricted by the upper roller and the lower roller, the coil wire 8 is shaped to have a width X in the up-down direction. Furthermore, when the coil wire 8 passes through the second shaping part 12B of a width restricted by the left roller and the right roller, the coil wire 8 is shaped to have a width Y in the left-right direction. By passing through the shaping part 12, as shown on the right side, the coil wire 8 is shaped into a coil wire 8 in a rectangular shape with a width X in the up-down direction and a width Y in the left-right direction.

The upper roller and the lower roller are movable by a drive mechanism (not shown) in an approaching direction and a separating direction with respect to each other, and a separation distance between the upper roller and the lower roller is changeable. Similarly, the left roller and the right roller are also movable by a drive mechanism (not shown) in an approaching direction and a separating direction with respect to each other, and a separation distance between the left roller and the right roller is changeable.

Accordingly, with the drive mechanism (not shown) driving to widen the separation distance between the upper roller and the lower roller and the separation distance between the left roller and the right roller such that shaping is not performed on the coil wire 8 corresponding to the start-finish end portion, the coil wire 8 in a round shape supplied from the wire supply part 11 directly passes through without shaping and is taken as the start-finish end portion in the state of the coil wire 8 in a round shape.

As shown in FIG. 3, the tension adjustment part 13 includes tension rollers (first tension roller 13A and second tension roller 13B) and a motor (not shown) rotating the tension rollers.

When a shaping drawing roller is provided on the immediate downstream side of the shaping part 12, the two tension rollers have a diameter of 130 mm ϕ. However, to bring the shaping part 12 closer to the downstream side, the shaping drawing roller is simply eliminated. As a result, slippage between the tension roller and the coil wire 8 frequently occurs, causing a problem that the coil wire 8 cannot be stably drawn out from the shaping part 12.

Thus, to enable the two tension rollers of the tension adjustment part 13 to effectively fulfill the role of the shaping drawing roller, the two tension rollers in this embodiment are enlarged to a diameter of 150 mm ϕ.

By enlarging the diameter of the tension rollers (first tension roller 13A and second tension roller 13B) in this manner, the contact area with the coil wire 8, which is made to pass over the first tension roller 13A and the second tension roller 13B, is increased, and the tension rollers (first tension roller 13A and second tension roller 13B) obtain a high gripping force capable of drawing out the coil wire 8 from the shaping part 12 without slippage with respect to the coil wire 8.

To ensure the contact area, the diameter of the tension rollers is preferably 140 mm ϕ or more. However, since an excessively large size requires more space, the diameter is preferably configured to be 200 mm ϕ or less.

In addition, when a shaping drawing roller is provided on the immediate downstream side of the shaping part 12, the material of the tension rollers (first tension roller 13A and second tension roller 13B) is urethane equivalent to a Shore hardness A90. However, to eliminate the shaping drawing roller and enable the two tension rollers of the tension adjustment part 13 to also serve the role of the shaping drawing roller, the material is changed to a natural rubber material equivalent to a Shore hardness A90 having a higher gripping force.

In this manner, using a material with a high frictional force at least in the portion of the tension rollers (first tension roller 13A and second tension roller 13B) that comes into contact with the coil wire 8, the tension rollers (first tension roller 13A and second tension roller 13B) obtain a high gripping force capable of drawing out the coil wire 8 from the shaping part 12 without slippage with respect to the coil wire 8.

As described above, with the two tension rollers of the tension adjustment part 13 also serving the role of the shaping drawing roller, it becomes possible to have a configuration without providing a shaping drawing roller for drawing out the coil wire 8 from the shaping part 12 between the tension rollers (first tension roller 13A and second tension roller 13B) and the shaping part 12. The shaping part 12 can be disposed significantly closer to the downstream side, and the pass line distance from the shaping part 12 to the split core 7, which is the winding target, can be significantly reduced.

In addition, although not shown in the figures, the first tension roller 13A and the second tension roller 13B are connected to each other by a belt, and by driving the belt with a motor, the first tension roller 13A and the second tension roller 13B rotate in synchronization.

In this configuration, both the first tension roller 13A and the second tension roller 13B serve as drive rollers. Thus, slippage between the tension rollers and the coil wire 8 is suppressed and the following does not occur: when one is a driven roller that simply rotates according to the movement of the coil wire 8, the driven roller would act as a load against the drive roller.

Furthermore, since the encoder ENC is also located on the upstream side of the tension adjustment part 13, the encoder ENC is configured to have a low frictional resistance to contribute to suppression of slippage between the tension rollers (first tension roller 13A and second tension roller 13B) and the coil wire 8.

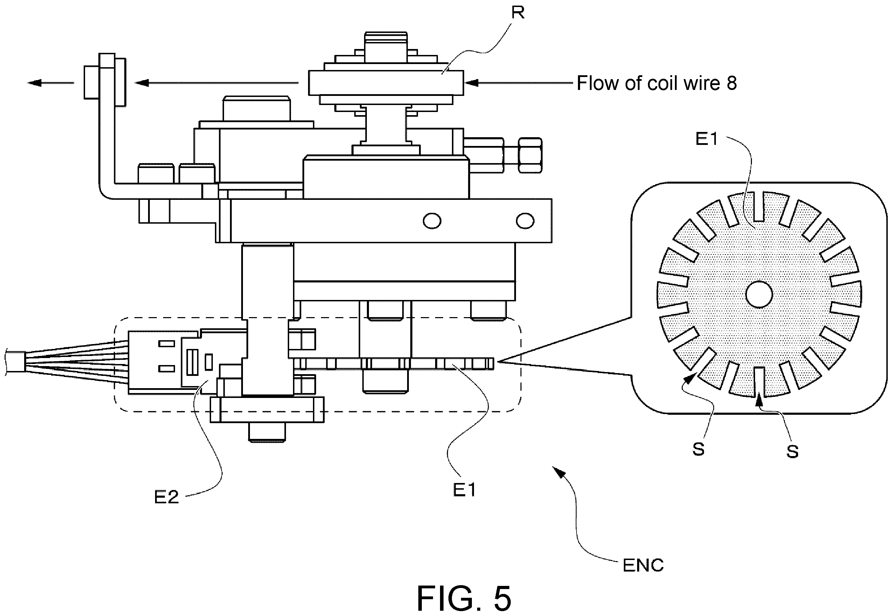

FIG. 5 is a side view showing a portion of the encoder ENC of the embodiment related to the present invention viewed from the lateral side. The figure in the callout box in FIG. 5 is a plan view showing only a rotating plate E1. In addition, FIG. 5 omits illustration of a unit that calculates the supply length of the supplied coil wire 8 based on the detection result detected by a detection part (to be described later) (refer to a dotted line enclosure) of the encoder ENC.

The encoder ENC is a measurement part that monitors the length of the coil wire 8 supplied to the split core 7. For example, based on the measured length of the coil wire 8, a control part (not shown) performs control instruction such as separation of the shaping rollers for the start-finish end to the shaping part 12.

As shown in FIG. 3, the encoder ENC includes two rollers R, and the coil wire 8 passes between the rollers R.

One roller R is connected to a detection part (to be described later), and the other roller R serves to keep the coil wire 8 in contact with the one roller R side in a manner that slippage does not occur between the coil wire 8 and the roller R connected to the detection part.

Since the pair of rollers R is in contact with the coil wire 8 in a manner that slippage does not occur with respect to the coil wire 8, in the case where the configuration of the detection part has a large load, the load will be applied to the coil wire 8 via the pair of rollers R.

From the viewpoint of the tension adjustment part 13, since this load is a force that acts on the side suppressing pulling of the coil wire 8 to the tension adjustment part 13 side, as a result, a greater drawing force is required to draw out the coil wire 8 from the shaping part 12.

Accordingly, reduction of the load on the coil wire 8 due to the configuration of the detection part achieves an effect similar to enhancing the gripping force of the tension rollers. In other words, if the load on the coil wire 8 due to the configuration of the detection part is reduced, the gripping force of the tension rollers required to also serve the role of the shaping drawing roller can be correspondingly reduced.

Thus, as shown in FIG. 5, as the configuration of the detection part, the encoder ENC includes: a rotating plate E1 that is attached to the rotation shaft of one roller R and has slits S at equal intervals as viewed in the circumferential direction on the outer circumferential side; and an optical sensor E2 that detects passage of the slits S of the rotating plate E1 in a non-contact manner, to minimize the load generated at the detection part.

This structure detects the rotation state (rotational frequency) of the roller R according to the passage of the slits S, and obtains the length of the coil wire 8 that has passed through based on the rotational frequency of the roller R and the circumferential length (length of circumference) of the contact portion of the roller R contacting the coil wire 8, to measure the length of the supplied coil wire 8.

As described above, in this embodiment, the tension rollers (first tension roller 13A and second tension roller 13B) have a high gripping force capable of drawing out the coil wire 8 (wire) from the shaping part 12 without slippage with respect to the coil wire 8. By not providing a shaping drawing roller, which is conventionally provided to draw out the coil wire 8 from the shaping part 12, between the tension rollers and the shaping part 12, it becomes possible to dispose the shaping part 12 on the downstream side.

Thus, since the pass line from the shaping part 12 to the split core 7 (winding target) can be suppressed to be short, compared to a conventional winding device, the start-finish end portion is often not yet entered in the pass line at the time point of determining that the winding count is insufficient, and it becomes easier to also accommodate control such as providing the start-finish end portion at a position shifted backward.

Although the present invention has been described above based on specific embodiments, the present invention is not limited to the above embodiments.

For example, although the tension adjustment part 13 has been shown using two tension rollers, three or more tension rollers may also be provided. In that case as well, all tension rollers are preferably configured as drive rollers driving synchronously.

As such, contents that can be understood from the embodiments and modifications and improvements made to the embodiments are included in the technical scope of the present invention, which is clear to those skilled in the art from the description in the claims.

### [Reference Signs List]

1: brushless motor, 2: stator, 3: rotor, 4: stator core, 5: insulator, 6: coil, 7: split core, 8: coil wire, 8A, 8B: portion, 10: winding device, 11: wire supply part, 12: shaping part, 12A: first shaping part, 12B: second shaping part, 13: tension adjustment part, 13A: first tension roller, 13B: second tension roller, 14: winding part, E1:rotating plate, E2: optical sensor, ENC: encoder, NZ: nozzle, R: roller, S: slit

## Claims

1. A winding device (10) winding a wire on a winding target, the winding device (10) being **characterized by** comprising:
a wire supply part (11) that supplies the wire in a round shape;
a shaping part (12) that is provided on a downstream side of the wire supply part (11) and shapes the wire into a rectangular shape;
a tension adjustment part (13) that is provided on a downstream side of the shaping part (12) and controls a tension during winding; and
a winding part (14) that is provided on a downstream side of the tension adjustment part (13) and winds the wire on the winding target, wherein
the shaping part (12) does not perform shaping on a portion of the wire corresponding to a start-finish end of the winding target, and performs shaping on the wire corresponding to a portion to be wound on the winding target,
the tension adjustment part (13) comprises:
a tension roller (13A, 13B); and
a motor that rotates the tension roller (13A, 13B), and
the tension roller (13A, 13B) has a gripping force for drawing out the wire from the shaping part (12) without slippage with respect to the wire.

2. The winding device (10) as claimed in claim 1, wherein
the gripping force is obtained by increasing a diameter of the tension roller (13A, 13B).

3. The winding device (10) as claimed in claim 1 or 2, wherein
the gripping force is obtained using a material with a high frictional force in at least a portion of the tension roller (13A, 13B) that comes into contact with the wire.
